# EUROPÄISCHE PATENTSCHRIFT

(11) **EP 1 955 430 B1**
(45) Veröffentlichungstag und Bekanntmachung des Hinweises auf die Patenterteilung: **23.05.2012**
(21) Anmeldenummer: 06818711.1
(22) Anmeldetag: 22.11.2006
(51) Int. Cl.: H02K 29/08, G01D 5/14, G01D 5/16

(54) **ELEKTROMOTOR**
ELECTRIC MOTOR
MOTEUR ÉLECTRIQUE

(30) Priorität: 01.12.2005 DE 102005058501
(43) Veröffentlichungstag der Anmeldung: 13.08.2008
(73) Patentinhaber: ebm-papst St. Georgen GmbH & Co. KG, 78112 St. Georgen (DE)
(72) Erfinder: HORNBERGER, Joerg, 72280 Dornstetten-Aach (DE); RUDEL, Christian, 78126 Königsfeld (DE); SCHREINER, Siegfried, 78054 Villingen-Schwenningen (DE)
(74) Vertreter: Raible, Tobias
(86) Internationale Anmeldenummer: PCT/EP2006/011158
(87) Internationale Veröffentlichungsnummer: WO 2007/062766

(56) Entgegenhaltungen:
- EP-A1- 0 313 046
- EP-A2- 1 263 119
- WO-A-00/04339
- WO-A-01/63210
- DE-A1- 4 126 137
- JP-A- 2002 252 946
- JP-A- 2003 065 796
- US-A- 4 594 548
- US-A- 5 602 681
- US-A- 5 815 089
- US-A1- 2005 035 674
- US-B1- 6 232 687
- LEITIS K ET AL: "Magnetoresistive sensors and a new hardware-based interpolation method for length and angle measurements" PROCEEDINGS OF IEEE SENSORS 2002. ORLANDO, FL, JUNE 12 - 14, 2002, IEEE INTERNATIONAL CONFERENCE ON SENSORS, NEW YORK, NY : IEEE, US, Bd. VOL. 1 OF 2. CONF. 1, 12. Juni 2002 (2002-06-12), Seiten 1432-1435, XP010605331 ISBN: 0-7803-7454-1

## Beschreibung

Die Erfindung betrifft einen Elektromotor, welchem für seine elektronische Kommutierung eine Drehwinkel-Sensorvorrichtung zugeordnet ist.

Um bei Elektromotoren eine genaue Bestimmung der Drehzahl und ggf. auch anderer Parameter wie Drehrichtung und Drehstellung zu ermöglichen, verwendet man spezielle Impulsgeber, z.B. optische Encoder. Nachteilig ist, dass derartige Encoder teuer sind und ihre Anbringung an Elektromotoren fertigungstechnisch aufwändig ist. Vielfach fehlt auch der notwendige Platz, weil der Elektromotor in eine Maschine eingebaut werden muss. Zudem ist die Anbringung solcher Encoder an Elektromotoren aufwändig, denn sie werden meistens im Bereich eines Wellenendes des Elektromotors angeordnet, so dass dieser dann nur noch ein freies Wellenende hat. Das schließt den Einsatz eines solchen Motors bei einigen Anwendungen aus. Weitere Nachteile derartiger Impulsgeber können abhängig vom Typ des Impulsgebers auftreten. Beispielsweise sind optische Encoder anfällig gegen Tauwasser und Verschmutzung, was vor allem bei solchen Elektromotoren problematisch ist, die extremen Umwelteinflüssen ausgesetzt sind, z.B. auf Schiffen.

Aus der US 5 602 681 kennt man eine Verstellvorrichtung zur linearen Verstellung des Zoomobjektivs einer Videokamera mittels eines Bürstenmotors, der eine Verstellspindel antreibt. Dieser Motor hat an einem seiner beiden Wellenenden ein Sensorrad mit einer Mehrzahl von Sensorpolen, das sich bei einer Drehung des Motors mitdreht und mit einem MR-Sensor zusammenwirkt, bei welchem die Breite der Sensorstreifen an die Breite der Sensorpole angepasst ist. Der MR-Sensor liefert ein Sinussignal und ein Cosinussignal, und diese Signale werden in zugeordneten Komparatoren in Rechtecksignale A und B umgewandelt, die gegeneinander um den Winkel 90° phasenverschoben sind.

Diese Impulse werden einem Phasen-Diskriminator zugeführt, dessen beide Ausgänge einen Vorwärts-Rückwärts-Zähler speisen, der die Winkelstellung der Spindel berechnet, indem er die Vorwärtsimpulse und die Rückwärtsimpulse zählt, die vom Phasendiskriminator erzeugt werden. Aus seinem Ausgangssignal berechnet dann ein Prozessor die gegenwärtige Drehstellung der Spindel. Aus der Differenz zwischen der augenblicklichen Drehstellung und der Soll-Drehstellung der Spindel berechnet der Prozessor mittels eines D/A-Wandlers analoge Signale und führt diese über eine Treiberschaltung dem Bürstenmotor zu, damit das Zoomobjektiv auf den gewünschten Sollwert eingestellt wird. Vor Benutzung muss diese Schaltung auf den Winkelwert 0° eingestellt werden, wozu an der Spindel ein entsprechender Endlagensensor vorgesehen ist.

Ein zweites Ausführungsbeispiel der US 5 602 681 verwendet einen Schrittmotor zum Antrieb der Spindel für den Antrieb des Zoomobjektivs. Dabei handelt es sich um eine Steuerung (im Gegensatz zu einer Lageregelung), und der Motor erhält zu seinem Antrieb "Mikroschrittsignale", die von einem Prozessor erzeugt werden.

Die US 5 815 089 zeigt eine Vorrichtung zur Übertragung von Signalen vom Gelenk eines Roboterarms zu einem Steuergerät. Dieses Gelenk wird von einem bürstenlosen Motor angetrieben. An seinem freien Wellenende hat dieser Motor drei Hallsensoren für seine Steuerung, und er hat zwei Magnetscheiben, die von einem MR-Sensor abgetastet werden.

Der MR-Sensor liefert zwei Sinuswellen. Alle Signale werden einer Schaltung zur Formung der Wellenform zugeführt und dort in Rechtecksignale umgewandelt. Die Signale vom MR-Sensor werden einem Vorwärts-Rückwärts-Zähler zugeführt. Der an diesem erhaltene Zählerwert wird in ein 16-Bit-Signal umgewandelt, und die diversen Signale werden zu einem parallelen Datenwort zusammengefügt. Dieses wird über einen Parallel-Serien-Wandler in ein serielles Signal umgesetzt und dann über eine Leitung zu einer Steuerschaltung für den Roboterarm übertragen. Von dort wird der bürstenlose Motor des Rotorarms gesteuert. Auf diese Weise können über ein relativ dünnes, flexibles Kabel zahlreiche Daten übertragen werden.

Es ist deshalb eine Aufgabe der Erfindung, einen neuen Elektromotor bereit zu stellen.

Diese Aufgabe wird gelöst durch einen Elektromotor gemäß Patentanspruch 1. Bei einem solchen Elektromotor werden im Betrieb analoge Rotorstellungssignale bestimmter Form und Phasenlage durch Erfassen der magnetischen Flussdichte eines auf der Motorwelle angeordneten Sensormagneten erzeugt. Aus diesen Rotorstellungssignalen wird durch einen Signalgenerator mindestens ein impulsförmiges Signal gebildet, welches eine hoch auflösende Bestimmung der Drehzahl, sowie eine Drehrichtungsbestimmung, ermöglicht. Da hierbei das Detektieren des Magnetfelds des Sensormagneten magnetisch erfolgt, ist die Funktionsfähigkeit auch bei harten Umweltbedingungen gewährleistet. Ferner ist die Fertigung derartiger Elektromotoren einfach, unkompliziert und kostengünstig, und eine derartige Sensorvorrichtung kann sehr kompakt sein, weil man die Sensoren auf einer ebenen Leiterplatte anordnen kann. So gelingt es, ohne Qualitätsverlust in einem kleinen Bauvolumen eine Sensorik unterzubringen, für die bislang ein wesentlich größerer Aufwand notwendig war.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen. Es zeigt:
- Fig. 1: ein Ausführungsbeispiel eines erfindungsgemäßen Elektromotors,
- Fig. 2: einen Längsschnitt durch ein Ausführungsbeispiel eines erfindungsgemäßen Außenläufermotors,
- Fig. 3: einen Sensormagneten, bei dem die Pole homogen magnetisiert sind, und die resultierende magnetische Flussdichte,
- Fig. 4: einen Sensormagneten mit einer sinusförmigen Magnetisierung und die resultierende magnetische Flussdichte,
- Fig. 5: eine Draufsicht auf einen erfindungsgemäßen Sensormagnetring,
- Fig. 6: einen Schnitt durch den Sensormagnetring entlang der Linie VI-VI aus Fig. 5,
- Fig. 7: eine Darstellung des Verlaufs der magnetischen Feldlinien bei einem Sensormagneten mit sinusförmigem Flussverlauf,
- Fig. 8: ein vereinfachtes Schaltbild mit einem erfindungsgemäßen Signalgenerator,
- Fig. 9: eine Rotorstellungs-Sensoranordnung nach einer Ausführungsform der Erfindung,
- Fig. 10: eine Sensoranordnung mit fünf symmetrisch in zwei unterschiedlichen Ebenen angeordneten Rotorstellungssensoren, und
- Fig. 11 - 14: eine Darstellung von Rotorstellungssignalen und entsprechenden impulsförmigen Signalen und Kommutierungssignalen.

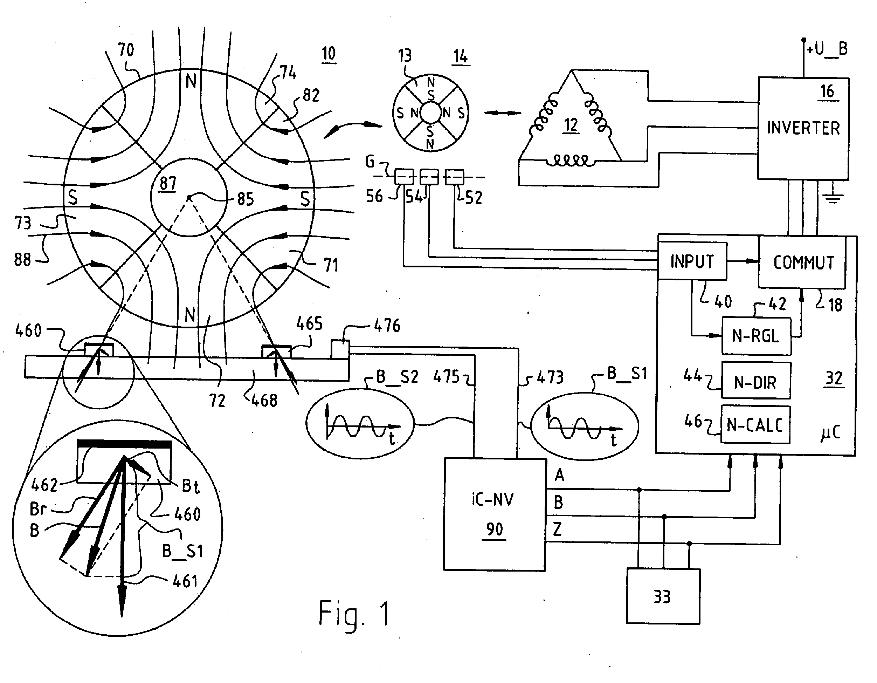

**Fig. 1** zeigt einen dreiphasigen Elektromotor 10 mit einem Stator 12 und einem mit diesem in Wechselwirkung stehenden Rotor 14 mit einem Rotormagneten 13. Der Stator ist als dreisträngiger Stator in Dreieckschaltung dargestellt. Dem Elektromotor 10 sind ein Mikrocontroller (Mikroprozessor) µC 32, ein Signalgenerator 90 vom Typ IC-NV sowie eine Endstufe INVERTER 16 zugeordnet. Der µC 32 weist eine Eingabeeinrichtung INPUT 40, einen Drehzahlregler N-RGL 42, eine Drehrichtungs-Bestimmungseinrichtung N-DIR 44, eine Drehzahlberechnungseinrichtung N-CALC 46 und eine Kommutierungssteuerung COMMUT 18 auf.

Der Mikrocontroller 32 ist über die Kommutierungssteuerung 18 mit der Endstufe 16 und über die Eingabeeinrichtung 40 mit drei digitalen Rotorstellungssensoren 52, 54, 56 verbunden, welche beispielhaft durch digitale Hallsensoren vom Typ A3280 realisiert werden und im Betrieb digitale Rotorstellungssignale für die Kommutierung des Motors 10 erzeugen.

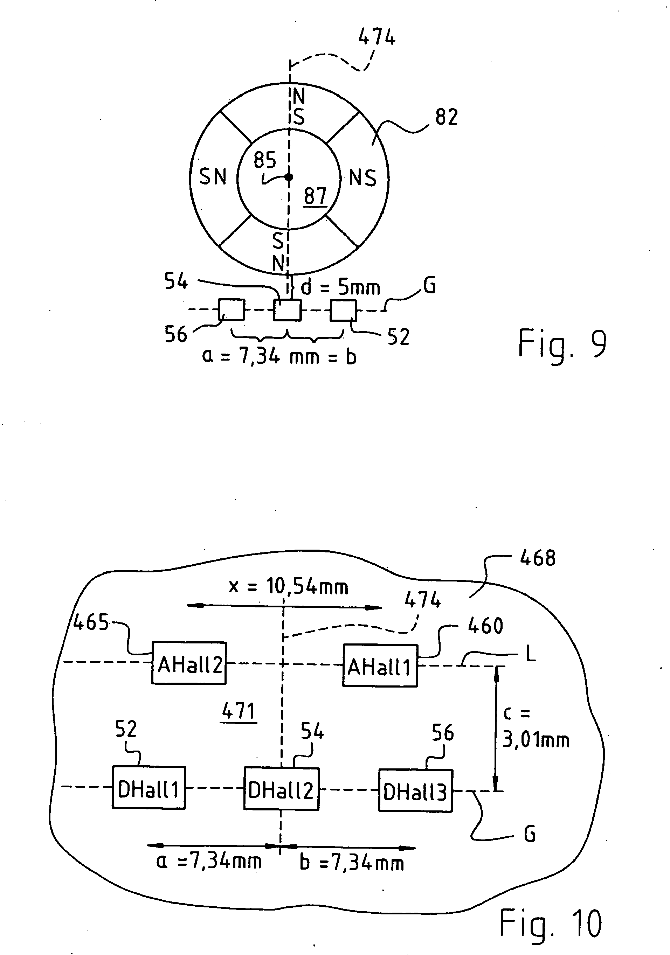

Wie aus Fig. 1 ersichtlich, sind die digitalen Rotorstellungssensoren 52, 54, 56 bevorzugt derart auf einer Geraden G angeordnet, dass sie Rotorstellungssignale mit jeweils 60° el. Phasendifferenz zueinander erzeugen. Dabei liegt die Gerade G parallel zu einer Tangente an den Umfang des Rotors 14. Fig. 9 zeigt eine beispielhafte Anordnung der digitalen Rotorstellungssensoren 52, 54, 56 gemäß einer bevorzugten Ausführungsform. Alternativ können die digitalen Rotorstellungssensoren 52, 54, 56 auch radial auf einer Kreisbahn um den Rotor 14 im Winkelabstand von 60° el. (also 30° mech. bei einem vierpoligen Rotor) zueinander angeordnet sein.

Die Rotorstellungssensoren 52, 54, 56 dienen zur Erfassung des Magnetfeldes des Rotormagneten 13 im Betrieb des Motors 10 für die Erzeugung von digitalen Rotorstellungssignalen. Die digitalen Rotorstellungssignale werden über die Eingabeeinrichtung 40 der Kommutierungssteuerung 18 und dem Drehzahlregler 42 zugeführt. Der Drehzahlregler 42 bestimmt aus den digitalen Rotorstellungssignalen einen Drehzahl-Istwert des Rotors 14 und erzeugt unter Verwendung des Drehzahl-Istwerts eine Drehzahlregelgröße, welche der Kommutierungssteuerung 18 zugeführt wird. Die Kommutierungssteuerung 18 erzeugt in Abhängigkeit von der Drehzahlregelgröße Kommutierungssignale zur Ansteuerung der Endstufe 16, welche in Abhängigkeit von diesen Kommutierungssignalen den Stator 12 ansteuert.

Der Elektromotor 10 hat einen vierpoligen permanentmagnetischen Sensormagneten 82, welcher auf einer Welle 87 des Rotors 14 angeordnet ist, deren Drehachse mit 85 bezeichnet ist. Zwei analoge Rotorstellungssensoren 460, 465 dienen zur Abtastung des Magnetfeldes dieses Sensormagneten 82 im Betrieb des Motors 10 für die Erzeugung von analogen Rotorstellungssignalen B_S1 und B_S2. Die Erfindung ist hierbei jedoch nicht auf einen bestimmten Rotorstellungssensortyp beschränkt, vielmehr können verschiedene Arten von analogen Rotorstellungssensoren verwendet werden. Beispielsweise können analoge Hallsensoren, wie z.B. analoge Hallsensoren vom Typ A1321, AMR-Hallsensoren oder GMR-(Giant Magneto Resistor) Sensoren als Rotorstellungssensoren Anwendung finden. Des Weiteren können auch programmierbare Sensoren, wie z.B. Sensoren vom Typ Sentron 2SA-10, verwendet werden. Die von den Rotorstellungssensoren 460, 465 erzeugten analogen Rotorstellungssignale B_S1 und B_S2 werden in Fig. 1 über einen Stecker 476 und Leitungspaare 473 bzw. 475 dem Signalgenerator 90 zugeführt, damit dieser aus den analogen Signalen B_S1 und B_S2 digitale Signale A, B und Z erzeugt, welche dem Mikrocontroller 32 und oder einer internen oder externen Auswertevorrichtung 33 zugeführt werden.

Bevorzugt sind die analogen Rotorstellungssensoren 460 und 465 auf einer Trägeranordnung, hier in Form einer Leiterplatte 468, in einer gemeinsamen Ebene angeordnet, wobei die Sensoren 460, 465 beispielsweise auf die Leiterplatte 468 aufgelötet sind. Auch der Signalgenerator 90, der Mikrocontroller 32, und die Endstufe 16 können zumindest teilweise auf der Leiterplatte 468 angeordnet sein. In einer bevorzugten Ausführungsform sind darüber hinaus die digitalen Rotorstellungssensoren 52, 54, 56 auf dieser Leiterplatte 468 angeordnet, wobei die von diesen erzeugten digitalen Rotorstellungssignale in dieser Ausführungsform durch Abtastung des Magnetfeldes des Sensormagneten 82 im Betrieb erzeugt werden. Der Sensormagnet 82 ist über die Welle 87 fest mit dem Rotor 14 verbunden und ermöglicht so auch eine Auswertung des Magnetfeldes des Sensormagneten 82 durch die digitalen Rotorstellungssensoren 52, 54, 56 und die zur Kommutierung und Drehzahlregelung erforderliche Bestimmung der Drehzahl des Rotors 14 des Motors 10. Fig. 10 zeigt eine beispielhafte Anordnung der Rotorstellungssensoren 460, 465, 52, 54, 56. Diese liegen in derselben Ebene, gewöhnlich auf einer ebenen Leiterplatte.

Die Verwendung der digitalen Rotorstellungssensoren 52, 54, 56 ist optional, da auch durch eine entsprechende Auswertung der analogen Rotorstellungssignale B_S1 und B_S2 die zur Erzeugung der Kommutierungssignale erforderliche Information bestimmbar ist. Allerdings ist diese Auswertung aufwändiger und somit teurer als die Verwendung herkömmlicher Bauteile und Strukturen, d.h. als die Verwendung der digitalen Rotorstellungssensoren 52, 54, 56.

### Arbeitsweise

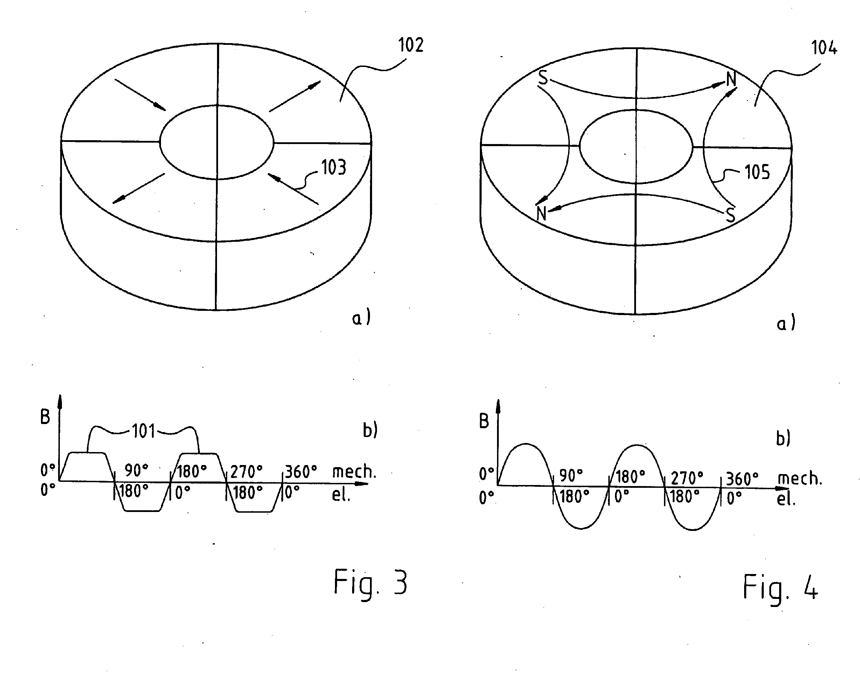

Der Sensormagnet 82 ist ringförmig mit einer im Wesentlichen zylindrischen Oberfläche ausgebildet und hat vier Pole 71, 72, 73 und 74. Er erzeugt ein im Wesentlichen sinusförmiges Magnetfeld 88 bzw. eine im Wesentlichen sinusförmige magnetische Flussdichte B, welche beispielhaft in Fig. 4 dargestellt ist. Die dargestellte Magnetisierung des Sensormagneten 82 wird als polorientiert bzw. polorientiert lateral bezeichnet, und die Magnetisierung innerhalb eines Pols ist nicht homogen, sondern sie ändert abhängig vom Ort die Richtung und die Intensität, während beispielsweise bei einem diametral magnetisierten Magneten die Magnetisierung innerhalb eines Pols homogen ist und immer in dieselbe Richtung weist.

In Fig. 1 ist in der vergrößerten Darstellung des Rotorstellungssensors 460 die so genannte sensitive Fläche 462 zu sehen, in der die Messung stattfindet. Dabei detektiert der Rotorstellungssensor 460 nur den Anteil der vektoriellen magnetischen Flussdichte B, der in Richtung der Normalen 461 auf der sensitiven Fläche 462 zeigt. Da der Rotorstellungssensor 460 nicht tangential zum Sensormagneten 82 angeordnet ist, detektiert er anders als bei üblichen Anordnungen neben dem radialen Anteil B_r der magnetischen Flussdichte B auch deren tangentialen Anteil B_t. Der Anteil der magnetischen Flussdichte B, der in Richtung der Normalen 461 zeigt, ist mit B_S1 bezeichnet, und dies entspricht dem vom Rotorstellungssensor 460 (S1) gemessenen Signal.

Trotz der nicht tangentialen Anordnung der Rotorstellungssensoren 460 und 465 ergeben sich bei einem Sensormagneten 82 mit sinusförmigem Feldverlauf auch sinusförmige Signale B_S1 und B_S2, welche in Abhängigkeit von der geometrischen Anordnung (Dislozierung) der Rotorstellungssensoren 460, 465 eine Phasendifferenz aufweisen. Gemäß einer besonders bevorzugten Ausführungsform der Erfindung sind die Rotorstellungssensoren 460, 465 am Umfang des vierpoligen Sensormagneten 82 derart angeordnet, dass diese Phasendifferenz 90° beträgt, so dass B_S1 ein Sinussignal und B_S2 ein Cosinussignal darstellt.

Das Sinussignal B_S1 und das Cosinussignal B_S2 werden dem Signalgenerator 90 zugeführt, der daraus die beiden digitalen Signale A und B mit einer Phasendifferenz von 90° zueinander erzeugt. Hierbei wird für das Sinussignal B_S1 beispielsweise das Signal A erzeugt, wobei pro elektrischer Umdrehung (360° el.) des Sensormagneten 82, d.h., pro Sinusperiode von B_S1, eine vorgegebene Anzahl von Impulsen für das Signal A erzeugt werden. Vorzugsweise werden hierbei 16 Impulse für das Signal A erzeugt. Da der Sensormagnet 82 im vorliegenden Beispiel vierpolig ist, umfasst B_S1 pro mechanischer Umdrehung (360° mech.) des Sensormagneten 82 zwei Sinusperioden, sodass für das Signal A pro mechanischer Umdrehung 32 Impulse erzeugt werden. Dies gilt analog für die Erzeugung eines Signals B aus B_S2, sodass das Signal B ebenfalls 32 Impulse pro mechanische Umdrehung des Sensormagneten 82 aufweist.

Des Weiteren wird aus den Signalen B_S1 und B_S2 ein digitales Signal Z gebildet, welches beispielhaft nur zwei unterschiedliche Werte "HOCH" und "NIEDRIG" aufweisen kann und sich pro Sinusperiode von B_S1 (oder B_S2) vorzugsweise nur einmal von NIEDRIG auf HOCH und nur einmal von HOCH zurück auf NIEDRIG ändert. Das Signal Z dient zur Nullpunkt-Findung bzw. zur Sicherheit und wird insbesondere dann verwendet, wenn eine Kommutierung anhand der Signale A und B erfolgt. Da die Signale A und B eine Mehrzahl von Impulsen (z.B. 16) pro elektrische Umdrehung erzeugen, ist z.B. ein Polwechsel aus den Signalen A und B alleine nicht eindeutig detektierbar.

Unter Verwendung der digitalen Signale A und B kann in der Einrichtung 46 zur Drehzahlberechnung eine hochauflösende Drehzahlberechnung für den Sensormagneten 82 und - da dieser über die Welle 87 fest mit dem Rotor 14 verbunden ist - für den Rotor 14 des Elektromotors 10 erfolgen. Hierzu können die Signale A und B vor einer Auswertung durch die Einrichtung 46 (Fig. 1) miteinander verknüpft werden. Beispielsweise kann durch eine XOR-Verknüpfung der Signale A und B ein verknüpftes Signal mit insgesamt 64 Impulsen pro mechanische Umdrehung des Sensormagneten 82 erzeugt werden, welches eine hoch auflösende Drehzahlberechnung ermöglicht. Die Signalverarbeitung kann alternativ auch in einer Auswertevorrichtung 33 erfolgen. Eine erfindungsgemäße Drehzahlberechnung ist insbesondere bei Applikationen mit sehr langsam laufenden Motoren notwendig, insbesondere bei Drehzahlen im Bereich von 0 U/min bis etwa 100 U/min. Bei solch niedrigen Drehzahlen sind die zeitlichen Abstände zwischen den Signalwechseln von digitalen Rotorstellungssensoren so groß, dass eine genaue Drehzahlbestimmung nicht mehr möglich ist. Somit ist auch eine genaue Drehzahlregelung nicht mehr möglich. Gerade in solchen Fällen wurden bisher häufig optische Encoder eingesetzt.

Zur Bestimmung der Drehrichtung des Sensormagneten 82 und somit des Rotors 14 können die digitalen Signale A und B durch die zur Bestimmung der Drehrichtung dienende Einrichtung 44 ausgewertet werden. Beispielsweise kann durch einen Vergleich der beiden Signale A und B unter Berücksichtigung der Phasendifferenz von 90° aus diesen digitalen Signalen die Drehrichtung des Rotors 14 ermittelt werden.

Darüber hinaus kann aus den digitalen Signalen A und B unter Verwendung des Z-Signals ein Absolutwert für die elektrische Umdrehung des Sensormagneten 82 und somit des Rotormagneten 13 berechnet werden, da das Z-Signal zur Nullpunkt-Findung geeignet ist. Bei einer Ausgestaltung des Sensormagneten 82 mit SP = 2 Sensorpolen entspricht dieser elektrische Absolutwert dem Absolutwert für die mechanische Umdrehung des Sensormagneten 82, und jedem Drehwinkel des Rotors 14 kann somit unabhängig von der Polzahl RP des Rotormagneten 14 ein eindeutiger Wert zugeordnet werden.

Bei Sensormagneten mit einer Sensorpolzahl SP, welche größer als die Rotorpolzahl RP ist, kann der Drehwinkel direkt nach dem Einschalten des Motors ohne eine Ergänzung der Vorrichtung weder elektrisch bezüglich des Rotors noch mechanisch exakt angegeben werden, sondern es muss erst eine Initialisierung durchgeführt werden, um einen definierten Anfangszustand zu erreichen. Dies ist bei sicherheitsrelevanten Anwendungen oft nicht tolerierbar.

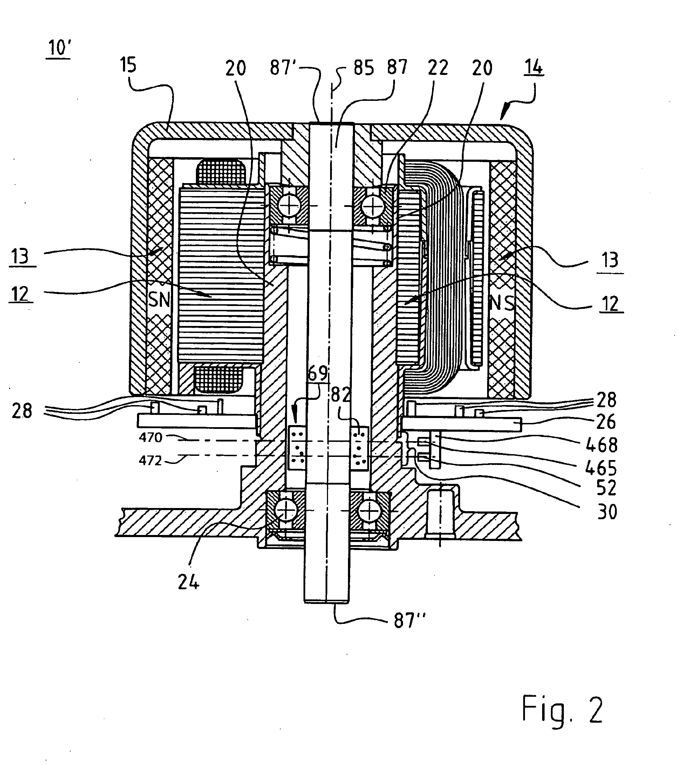

Fig. 2 zeigt einen Schnitt durch die Drehachse 85 eines schematisch dargestellten Außenläufermotors 10'. Dieser weist ein Lagerrohr 20 auf, in dem die Welle 87' durch zwei Radiallager 22, 24 gelagert ist. Das Lagerrohr 20 hat unten einen Flansch 21. Auf dem Lagerrohr 20 ist der Stator 12 befestigt. An der Welle 87 ist eine Rotorglocke 15 befestigt, und in ihr ist der permanentmagnetische Rotormagnet 13 befestigt, so dass er dem Stator 12 gegenüberliegt und mit diesem in Wechselwirkung treten kann.

Am Lagerrohr 20 ist eine Leiterplatte 26 mit elektrischen und elektronischen Bauteilen 28 angeordnet. An der Leiterplatte 26 ist die - ebene - Leiterplatte 468 (Fig. 1) mit dem analogen Rotorstellungssensor 465 und dem digitalen Rotorstellungssensor 52 sowie den - nicht dargestellten - Rotorstellungssensoren 460, 54, 56 angebracht, so dass die Leiterplatte 468 parallel zur Drehachse 85 verläuft. Die Anordnung der Rotorstellungssensoren 460, 465, 52, 54, 56 auf der Leiterplatte 468 ermöglicht eine einfache und günstige Montage. Dabei werden die Rotorstellungssensoren 460, 465, 52, 54, 56 bevorzugt auf der Seite der Leiterplatte 468 angeordnet, die dem Sensormagneten 82 gegenüberliegt, um eine Beeinflussung des magnetischen Flusses B durch die Leiterplatte 468 zu verringern.

Der schematisch dargestellte Sensormagnetring 69 mit dem Sensormagneten 82 ist verdrehsicher auf der Welle 87 derart angeordnet, dass die Rotorstellungssensoren 460, 465, 52, 54, 56 im zylindrischen Umfangsbereich 30 des Sensormagneten 82 liegen. Da der Sensormagnetring 69 in diesem Ausführungsbeispiel innerhalb des Lagerrohrs 20 liegt, ist das zwischen dem Sensormagnetring 69 und den Rotorstellungssensoren 460, 465, 52, 54, 56 liegende Lagerrohr 20 bevorzugt aus einem magnetisch nichtleitenden Material, wie z.B. Aluminium oder Kunststoff, gefertigt.

Die analogen Sensoren 465 etc. liegen dort, wo eine zur Drehachse 85 senkrecht verlaufende erste Ebene 470 die Leiterplatte 468 schneidet. Die digitalen Sensoren 52 etc. liegen dort, wo eine zur Drehachse 85 senkrecht verlaufende zweite Ebene 472 die Leiterplatte 468 schneidet. Die Ebene 470 schneidet die Leiterplatte 468 längs einer Linie, die in Fig. 10 mit L bezeichnet ist, und die Ebene 472 schneidet die Leiterplatte 468 längs einer Linie, die in Fig. 10 mit G bezeichnet ist. Die betreffenden Hallsensoren sind auf diesen Linien L bzw. G angeordnet, wie das Fig. 10 zeigt.

Wie Fig. 2 zeigt, verläuft die Ebene 470 bevorzugt durch den Sensormagnet 82, damit die analogen Hallsensoren auf der Leiterplatte 468 nicht im Streuflussbereich des Sensormagneten 82 liegen, sondern dort, wo dieser magnetische Fluss am größten ist.

Auch die Ebene 472 verläuft - aus dem gleichen Grund - bevorzugt durch den Sensormagneten 82.

Die Welle 87 wird bevorzugt aus einem magnetisch leitenden Werkstoff gefertigt, beispielsweise einem ferromagnetischen Stahl, damit sie als magnetischer Rückschluss für den Sensormagneten 82 wirken kann. Jedoch ist auch eine Welle aus einem magnetisch nichtleitenden Werkstoff, z.B. rostfreiem Stahl oder Kunststoff, möglich.

Eine Besonderheit der Anordnung von Fig. 2 ist, dass weder der Sensormagnet 82 noch die Rotorstellungssensoren 460, 465, 52, 54, 56 an einem Wellenende bzw. in der Verlängerung der Wellenenden 87' 87" angeordnet sind, sondern dass beide Wellenenden 87', 87" frei sind und genutzt werden können. Man kann dementsprechend von einer dezentralen Anordnung sprechen, und diese ermöglicht neue Anwendungen. Insbesondere Anwendungen, bei denen beide Wellenenden 87', 87" des Elektromotors zum Antrieb benötigt werden, können also mit einer erfindungsgemäßen Drehwinkelsensorvorrichtung versehen werden.

Bei einem - nicht dargestellten - Innenläufermotor oder einem Lüfter kann der Sensormagnetring 69 in gleicher Weise auf der Welle angeordnet werden. Die erfindungsgemäße Drehwinkelsensorvorrichtung ist somit universell einsetzbar.

**Fig. 3** zeigt einen vierpoligen Sensormagneten 102, bei dem die einzelnen Pole homogen und in eine Richtung magnetisiert sind. Die Magnetisierung ist mit 103 bezeichnet. Die resultierende magnetische Flussdichte B am Umfang ist unten über den mechanischen und den elektrischen Drehwinkel aufgetragen, und es ergibt sich ein trapezförmiger Verlauf der magnetischen Flussdichte B. Wegen der Plateaus 101 ist eine Auswertung in der Mitte der Pole schwierig.

**Fig. 4** zeigt einen vierpoligen Sensormagneten 104 mit einer Magnetisierung, die als polorientiert und lateral (im Gegensatz zu einer ebenfalls möglichen axialen Magnetisierung) bezeichnet werden kann. Die Magnetisierung 105 verläuft bogenförmig durch den Magneten. Die am Umfang gemessene magnetische Flussdichte ist analog zu Fig. 3 aufgetragen. Es ergibt sich ein im Wesentlichen sinusförmiger Verlauf der magnetischen Flussdichte B, der besonders gut zur Auswertung geeignet ist.

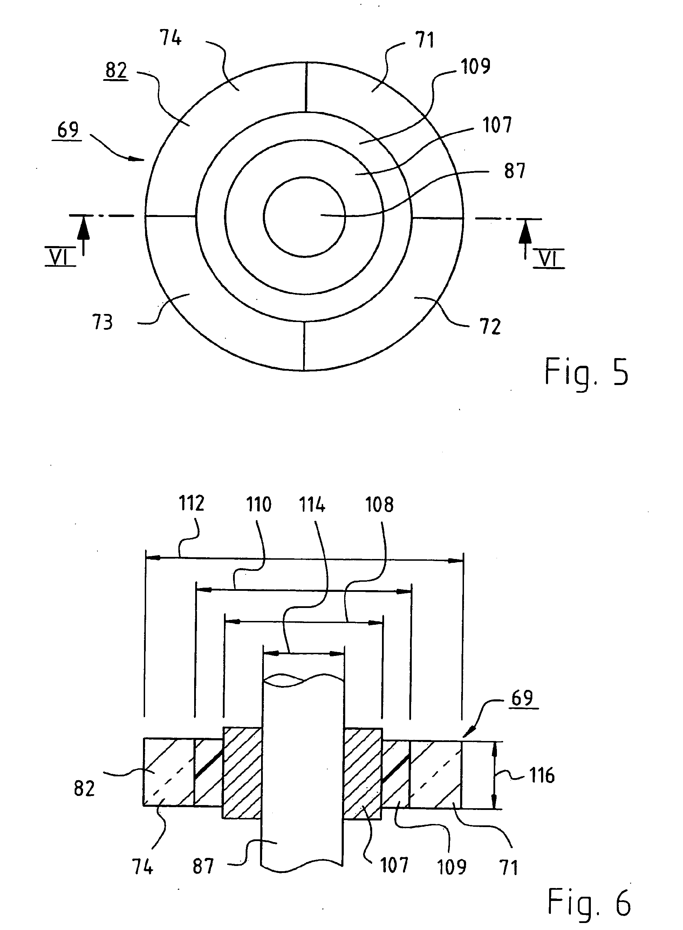

**Fig. 5** zeigt eine Draufsicht auf den Sensormagnetring 69 der **Fig. 2** und **Fig. 6** einen Schnitt durch den Sensormagnetring 69, der auf der Welle 87 befestigt ist. Der Sensormagnetring 69 weist den Sensormagneten 82 mit den vier Sensorpolen 71, 72, 73 und 74, einen Metallring 107 und einen die Sensorpole 71 bis 74 mit dem Metallring 107 verbindenden Kunststoffring 109 auf.

Der Metallring 107 sitzt auf der Welle 87 und ist mit dieser drehfest verbunden. Bevorzugt wird für den Metallring 107 Messing verwendet. Der Kunststoff 109 wird beispielsweise über ein Spritzgussverfahren zwischen den Metallring 107 und den Sensormagneten 82 gebracht, um diese zu verbinden und gleichzeitig einen Ausgleich für Spannungen zu schaffen, die durch thermische Ausdehnung entstehen könnten und die sonst zu einer Sprengung des Sensormagnetrings 82 führen könnten.

Der Außendurchmesser des Sensormagnetrings 82 ist mit 112 bezeichnet und beträgt beispielsweise 37 mm. Der Außendurchmesser liegt bevorzugt im Bereich 15 mm bis 50 mm, weiter bevorzugt im Bereich 20 bis 40 mm. Der Innendurchmesser des Sensormagneten 82 bzw. der Außendurchmesser des Kunststoffrings 109 ist mit 110 bezeichnet und beträgt beispielsweise 27 mm. Der Innendurchmesser des Kunststoffrings 109 bzw. der Außendurchmesser des Metallrings 107 ist mit 108 bezeichnet und beträgt beispielsweise 20 mm. Der Durchmesser der Welle 87 ist mit 114 bezeichnet, und er beträgt beispielsweise 8 mm. Bevorzugte Werte für den Durchmesser 114 der Welle liegen im Bereich 5 mm bis 15 mm, es sind jedoch je nach Motorgröße größere und kleinere Durchmesser möglich.

Der Innendurchmesser des Metallrings 107 ist bevorzugt so gewählt, dass eine gute Verbindung mit der Welle 87 entsteht. Die Verwendung eines inneren Metallrings 107 ist vorteilhaft, da der Sensormagnet 82 in einer oder mehreren Standardgrößen gefertigt werden kann und die Anpassung des Sensormagnetrings 69 an die Welle 87 über eine in der Herstellung günstige Änderung des Innendurchmessers 114 des Metallrings 107 erfolgen kann.

Die Breite des Magnetmaterials 71 bis 74 ist mit 116 bezeichnet. Die Breite 116 des Sensormagneten 69 beträgt beispielsweise 7 mm. Die Breite für einen reinen Sensormagneten, der also nicht gleichzeitig als Rotormagnet dient, liegt bevorzugt im Bereich 3 mm bis 20 mm, weiter bevorzugt im Bereich 5 mm bis 15 mm, und besonders bevorzugt im Bereich 6 mm bis 12 mm.

Die Sensorpolzahl SP beträgt bevorzugt SP = 2, 4, 6 oder 8 und besonders bevorzugt SP = 2 oder 4.

In Anwendungsfällen, in denen der Sensormagnetring 69 in einer korrosiven Umgebung angeordnet ist, kann er zusätzlich von einem - bevorzugt magnetisch nichtleitenden - korrosionsbeständigen Material umgeben werden. So ist es beispielsweise möglich, den Sensormagneten in magnetisch nichtleitendem Edelstahl einzuschweißen. Mit einem solchen Sensormagnetring 69 kann beispielsweise ein Nassläufer realisiert werden, bei dem die Welle von Kühlflüssigkeit umgeben ist.

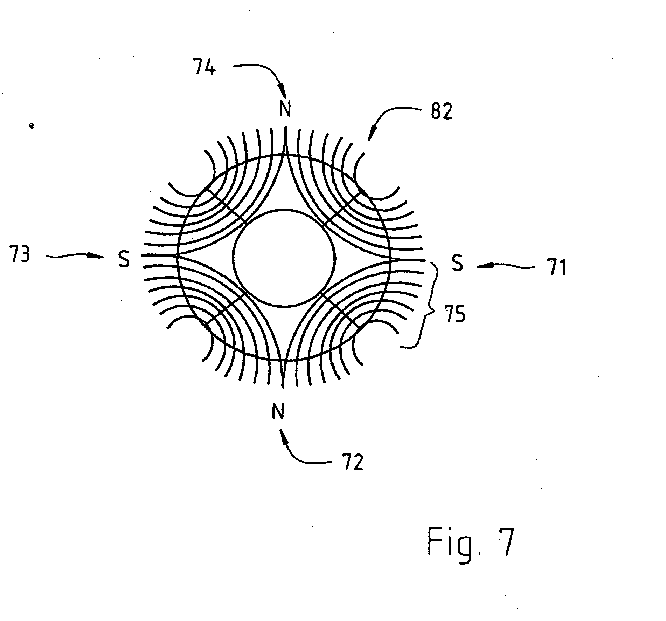

**Fig. 7** zeigt eine detaillierte Darstellung des Magnetfelds bzw. der magnetischen Flusslinien des ringförmigen Sensormagneten 82 der Fig. 1.

Der Sensormagnet 82 ist vierpolig ausgeführt und weist die zwei Nordpole 72, 74 (N) und die zwei Südpole 71, 73 (S) auf. Der Sensormagnet 82 ist sinusförmig magnetisiert, sodass sich an seinem äußeren Umfang ein im Wesentlichen sinusförmiger magnetischer Flussverlauf ergibt. Der durch die Magnetisierung bestimmte magnetische Flussverlauf zwischen den einzelnen Magnetpolen 71, 72, 73, 74 ist durch entsprechende magnetische Feldlinien 75 angedeutet.

Der Sensormagnet 82 hat bevorzugt eine im Wesentlichen zylindrische Form. Als Magnetwerkstoff ist beispielsweise ein Hartferrid-Compound 13/22p nach DIN 17 410 geeignet.

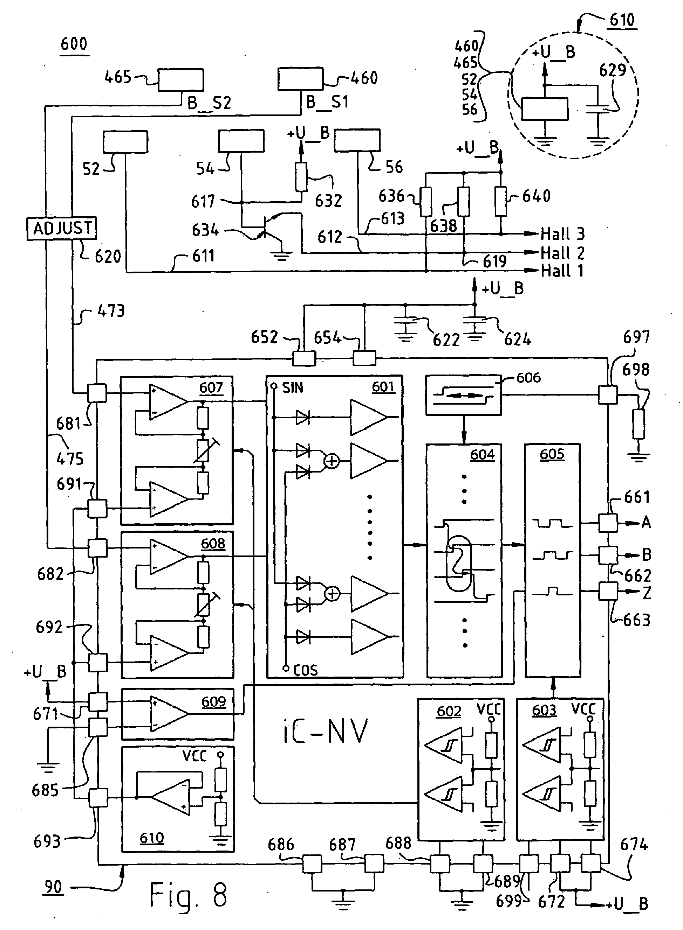

**Fig. 8** zeigt ein vereinfachtes Schaltbild 600 mit den digitalen Rotorstellungssensoren 52, 54, 56 und den analogen Rotorstellungssensoren 460 und 465 von Fig. 1, welche über die Leitungen 473 bzw. 475 mit dem Signalgenerator 90 verbunden sind. Im Gegensatz zu Fig. 1 ist in Fig. 8 zwischen den analogen Rotorstellungssensoren 460 und 465 und dem Signalgenerator 90 eine Einrichtung ADJUST 620 angeordnet, welche zur Anpassung der analogen Rotorstellungssignale B_S1, und B_S2 zur Verwendung durch den Signalgenerator 90 dient. Dort können die Signale B_S1 und B_S2, falls erforderlich, so justiert werden, dass sie denselben Offset und die gleich Amplitude haben. Hierdurch wird die Messgenauigkeit erhöht. Eine entsprechende Schaltung ist z.B. bekannt aus der WO 2004/001341 A1 (PCT 266), auf deren Inhalt der Kürze halber Bezug genommen wird.

Fig. 8 zeigt beispielhaft die Verwendung eines Signalgenerators vom Typ iC-NV der Firma iC-Haus. Dieser Signalgenerator 90 dient zur Erzeugung der Signale A, B und Z. Seine Anschlüsse sind wie folgt bezeichnet:
- 681: PSIN
- 682: PCOS
- 652: Vcc
- 654: VDD
- 661: A
- 662: B
- 663: Z
- 671: PZERO
- 672: SF1
- 674: SFO
- 685: NZERO
- 686: GNDA
- 687: GND (Masse)
- 688: SG1
- 689: SG0
- 691: NSIN
- 692: NCOS
- 693: VREF
- 697: RCLK
- 699: NROT

Die Signale von den Eingängen 681, 691 werden einem Modul 607 INPUT SIN zugeführt. Analog werden die Signale von den Eingängen 682, 692 einem Modul 608 in INPUT COS zugeführt. Die Signale von den Eingängen 671, 685 werden einem Modul 609 INPUT ZERO zugeführt, und am Ausgang 693 eines Moduls 610 (VREF) liegt eine Referenzspannung VREF.

Mit 601 ist ein Modul CONVERSION CORE bezeichnet 602 ist ein Modul GAIN SELECT zur Einstellung der Verstärkung, und 603 ist ein Modul STEP/CYCLE SELECT. 604 ist ein Modul TRANSITION DISTANCE CONTROL, 605 ist ein Modul DIGITAL PROCESSING für die digitale Verarbeitung, und 606 ist ein Modul TRANSITION DISTANCE PRESET.

Der Signalgenerator 90 hat also eine Vielzahl von Anschlüssen und Modulen für eine Verarbeitung des Sinussignals B_S1 und des Cosinussignals B_S2, um aus diesen die digitalen Signale A, B und Z zu erzeugen. Wie Fig. 8 zeigt, ist der Signalgenerator 90 über seinen Anschluss PSIN 681 mit der Leitung 473 für das Sinussignal B_S1 und über seinen Anschluss PCOS 682 mit der Leitung 475 für das Cosinussignal B_S2 verbunden. Über seine Anschlüsse VCC 652 und VDD 654 ist der Signalgenerator 90 an eine Betriebsspannung +U_B von vorzugsweise +5 V angeschlossen, welche über eine Parallelschaltung von einem ersten Kondensator 622 mit vorzugsweise 100 nF und einem zweiten Kondensator 624 mit vorzugsweise 10 µF zur Spannungsglättung mit Masse verbunden ist. Die Betriebsspannung +U_B ist ebenfalls über die Anschlüsse PZERO 671, SF1 672 und SF0 674 des Signalgenerators 90 an diesen angeschlossen. Die Anschlüsse NZERO 685, GNDA 686, GND 687, SG1 688 und SG0 689 des Signalgenerators 90 sind mit Masse verbunden, und seine Anschlüsse NSIN 691, NCOS 692 und VREF 693 sind jeweils miteinander verbunden. Der Anschluss ROT 699 ist nicht belegt, und der Anschluss RCLK 697 ist über einen Widerstand 698 von vorzugsweise 500 kOhm mit Masse verbunden. An den Anschlüssen A 661, B 662 und Z 663 des Signalgenerators 90 werden die digitalen Signale A, B und Z ausgegeben.

Gemäß einer bevorzugten Ausführungsform der Erfindung wird der Signalgenerator 90 durch einen Interpolator iC-NV 6-Bit Sin/D Flash-Converter der Firma iC-Haus realisiert. Deshalb wird auf eine detaillierte Beschreibung der Funktionsweise des Signalgenerators 90 zur Erzeugung der digitalen Signale A, B und Z verzichtet. Es wird jedoch darauf hingewiesen, dass auch andere kommerziell verfügbare Signalgeneratoren oder speziell angefertigte Schaltungen zur Erzeugung der digitalen Signale A, B und Z verwendbar sind.

Fig. 8 zeigt auch eine bevorzugte Schaltung für die digitalen Rotorstellungssensoren 52, 54, 56. Der Sensor 52 ist ausgangsseitig über eine Leitung 611, welche über einen Widerstand 636 von vorzugsweise 4,7 kOhm mit der Betriebsspannung +U_B verbunden ist, mit der - nicht dargestellten - Eingabeeinrichtung 40 von Fig. 1 zur Übertragung eines digitalen Rotorstellungssignals Hall 1 verbunden. Analog hierzu ist der Sensor 56 ausgangsseitig über eine Leitung 613, welche über einen Widerstand 640 von vorzugsweise 4,7 kOhm mit der Betriebsspannung +U_B verbunden ist, ebenfalls mit der Eingabeeinrichtung 40 verbunden, zur Übertragung eines digitalen Rotorstellungssignals Hall 3. Der Sensor 54 ist ausgangsseitig mit einem Punkt 617 verbunden. Dieser ist über einen Widerstand 632 von vorzugsweise 4,7 kOhm mit der Betriebsspannung +U_B verbunden. Weiterhin ist der Punkt 617 mit der Basis eines Bipolartransistors 634 verbunden. Der Emitter und der Kollektor des Bipolartransistors 634 sind mit Masse bzw. einer Leitung 612 mit einem Punkt 619 zur Übertragung eines digitalen Rotorstellungssignals Hall 2 verbunden. Der Punkt 619 ist über einen Widerstand 638 von vorzugsweise 4,7 kOhm mit +U_B verbunden. Durch diese Schaltung erfolgt eine Invertierung des Signals Hall 2. Sofern die Signale Hall 1, Hall 2 und Hall 3 einen anderen Pegel als die Betriebsspannung +U_B haben sollen, können die Widerstände 636, 638, 640 mit einer entsprechend angepassten Spannung verbunden werden.

Wie aus einer Detailansicht 610 der Fig. 8 ersichtlich ist, ist jeder der Rotorstellungssensoren 460, 465, 52, 54, 56 eingangsseitig ebenfalls an die Betriebsspannung +U_B angeschlossen, welche jeweils über einen Kondensator 629 von vorzugsweise 100 nF zur Spannungsglättung mit Masse verbunden ist.

**Fig. 9** zeigt den vierpoligen Sensormagneten 82 und die drei digitalen Rotorstellungssensoren 52, 54, 56 von Fig. 1 in einer Anordnung gemäß einer bevorzugten Ausführungsform der Erfindung. Hierbei sind die Sensoren 52, 54, 56 in einer Ebene angeordnet, welche parallel zur Drehachse 85 des Sensormagneten 82 verläuft. In dieser Ebene sind die digitalen Rotorstellungssensoren 52, 54, 56 auf der parallel zu einer Tangente an den Sensormagneten 82 verlaufenden Geraden G derart zueinander angeordnet, dass die resultierenden Rotorstellungssignale eine Phasendifferenz von 60° el. aufweisen. Somit erzeugen die Sensoren 52, 54, 56 pro mechanischer Umdrehung des Sensormagneten 82 jeweils 12 Impulse.

In dem bevorzugten Ausführungsbeispiel beträgt der Abstand d des mittleren Rotorstellungssensors 54 von dem äußeren Umfang des Sensormagneten 82 d = 5 mm. Der Abstand a des in Fig. 9 links dargestellten Sensors 56 sowie der Abstand b des in Fig. 9 rechts dargestellten Sensors 52 von dem mittleren Sensor 54 beträgt a = b = 7,34 mm. Es wird jedoch darauf hingewiesen, dass diese Maße sich auf die oben beschriebenen Sensortypen und Abmessungen bzw. Polarisierung des Sensormagneten 82 beziehen und somit in Abhängigkeit hiervon variieren können.

**Fig. 10** zeigt die drei digitalen Rotorstellungssensoren 52, 54, 56 und die beiden analogen Rotorstellungssensoren 460 und 465 von Fig. 1 in einer Anordnung gemäß einer bevorzugten Ausführungsform der Erfindung. Hierbei sind die Sensoren 52, 54, 56, 460 und 465 in einer Ebene 471 der Leiterplatte 468 angeordnet, welche Ebene 471 parallel zur - nicht dargestellten - Drehachse 85 des Sensormagneten 82 verläuft. Diese Ebene 471 ist in Fig. 2 durch die Leiterplatte 468 festgelegt und entspricht in Fig. 10 der Blattebene.

In der Ebene 471 sind die digitalen Rotorstellungssensoren 52, 54, 56 wie bei Fig. 9 beschrieben auf der Geraden G angeordnet. Die analogen Rotorstellungssensoren 460 und 465 sind auf einer ebenfalls parallel zu einer Tangente zu dem Sensormagneten 82 verlaufenden Geraden L angeordnet, welche darüber hinaus parallel zur Geraden G verläuft. Die Sensoren sind symmetrisch zu einer Symmetrieebene 474 angeordnet, welche als gestrichelte Linie 474 eingezeichnet ist. Im Bereich dieser Linie 474 hat die Leiterplatte 468 ihren kleinsten Abstand d (Fig. 9) vom Sensormagneten 82.

Bei einer bevorzugten Ausführungsform beträgt der Abstand c der Geraden L von der Geraden G c = 3,01 mm. Der Abstand x des analogen Sensors 460 von dem analogen Sensor 465 beträgt in diesem Fall x = 10,54 mm, wobei jeder der Sensoren 460 und 465 gleich weit von der Drehachse 85 des Sensormagneten 82 entfernt angeordnet ist. Die Abstände a und b der digitalen Sensoren 52, 54, 56 voneinander betragen, wie bei Fig. 9 beschrieben, a = b = 7,34 mm. Es wird jedoch erneut darauf hingewiesen, dass diese Maße sich auf die oben beschriebenen Sensortypen und Abmessungen bzw. Polarisierung des Sensormagneten 82 beziehen und somit in Abhängigkeit hiervon variieren können. Diese Maße illustrieren den kompakten Aufbau,

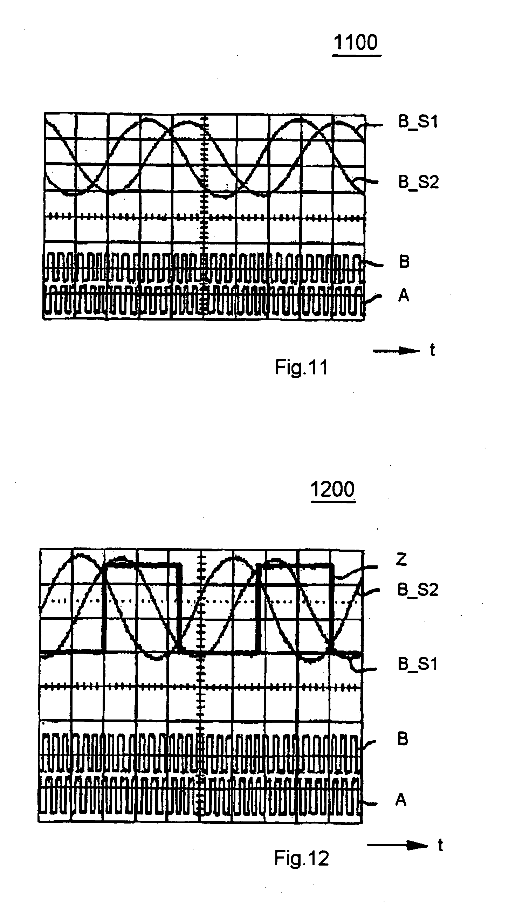

**Fig. 11** zeigt einen beispielhaften zeitlichen Verlauf 1100 der Rotorstellungssignale B_S1 und B_S2, die von den analogen Rotorstellungssensoren 460 und 465 von Fig. 1 erzeugt werden, sowie der daraus bestimmten digitalen Signale A und B. Gemäß Fig. 11 sind das Sinussignal B_S1 und das Cosinussignal B_S2 sowie die diesen entsprechenden digitalen Signale A und B jeweils für einen zeitlichen Ausschnitt dargestellt, welcher eine komplette mechanische Umdrehung des Sensormagneten 82 bzw. des Rotors 14 des Elektromotors 10 von Fig. 1 umfasst.

Wie aus Fig. 11 ersichtlich ist, weisen einerseits die Rotorstellungssignale B_S1 und B_S2 und andererseits die digitalen Signale A und B jeweils einen Phasenversatz von 90° zueinander auf. Jedes der digitalen Signale A und B umfasst 32 Impulse für die dargestellte mechanische Umdrehung des Sensormagneten 82.

**Fig. 12** zeigt einen weiteren beispielhaften zeitlichen Verlauf 1200 der Rotorstellungssignale B_S1 und B_S2 sowie der daraus erzeugten digitalen Signale A und B für einen zeitlichen Ausschnitt, welcher eine komplette mechanische Umdrehung des Sensormagneten 82 bzw. des Rotors 14 des Elektromotors 10 von Fig. 1 umfasst. Im Gegensatz zum zeitlichen Verlauf 1100 von Fig. 11 ist der zeitliche Verlauf 1200 in einem geänderten Maßstab dargestellt.

Darüber hinaus zeigt der zeitliche Verlauf 1200 ein beispielhaftes Z-Signal, welches bevorzugt aus den Rotorstellungssignalen B_S1 und B_S2 ermittelt wird. Wie aus Fig. 12 ersichtlich ist, ändert das Signal Z immer dann seinen Wert von "NIEDRIG" auf "HOCH" oder umgekehrt, wenn die Signale B_S1 und B_S2 den gleichen Wert aufweisen.

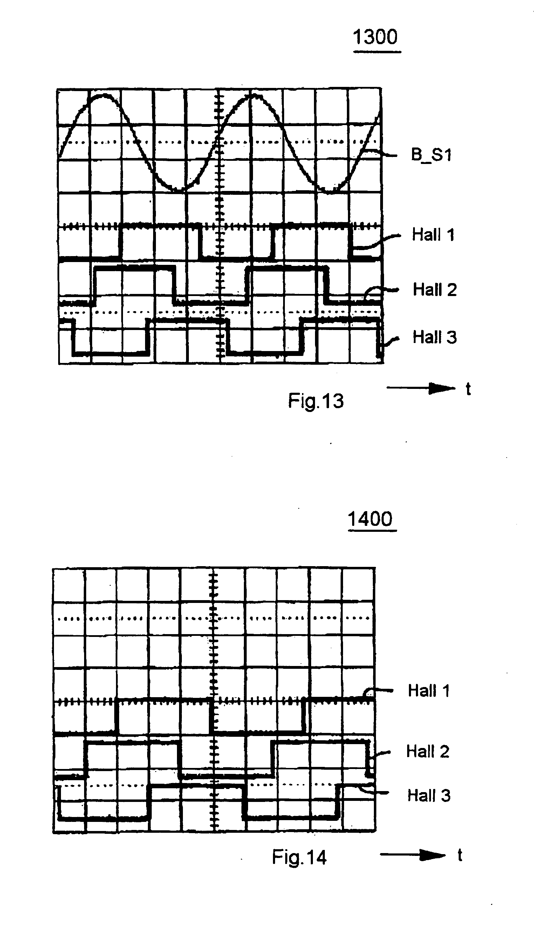

**Fig. 13** zeigt einen beispielhaften zeitlichen Verlauf 1300 des Rotorstellungssignals B_S1 sowie der Rotorstellungssignale Hall 1, Hall 2 und Hall 3, die von den digitalen Rotorstellungsserisoren 52, 54, 56 (Fig. 8) erzeugt werden. Gemäß Fig. 13 sind die Signale B_S1, Hall 1, Hall 2, Hall 3 für einen zeitlichen Ausschnitt dargestellt, welcher eine komplette mechanische Umdrehung des Sensormagneten 82 bzw. des Rotors 14 des Elektromotors 10 von Fig. 1 umfasst.

Wie Fig. 13 zeigt, weisen die Rotorstellungssignale Hall 1, Hall 2, Hall 3 jeweils einen Phasenversatz von 60° zueinander auf. Dieser Phasenversatz wird in dem beispielhaften zeitlichen Verlauf 1400 von **Fig. 14** durch einen geänderten Maßstab verdeutlicht.

Durch die Erfindung gelingt es, mit minimalem Aufwand Signale A, B zu erzeugen, die auch bei niedrigen Drehzahlen eine sehr exakte fortlaufende Erfassung der Drehzahl und eine exakte Regelung niedriger Drehzahlen ermöglichen.

Naturgemäß sind im Rahmen der vorliegenden Erfindung vielfache Abwandlungen und Modifikationen möglich.

## Patentansprüche

1. Elektromotor (10), welcher aufweist:
Einen Stator (12);
einen um eine Drehachse (85) drehbaren Rotor (14), welcher einen Sensormagneten (82) mit einer geradzahligen Zahl von Sensorpolen (71, 72, 73, 74) aufweist, welcher Sensormagnet (82) zur Erzeugung eines Magnetflusses mit einer Magnetflussdichte ausgebildet ist, die über dem Drehwinkel einen sinusförmigen Verlauf hat;
und zur drehbaren Lagerung des Sensormagneten (82) eine Welle (87) und ein Lagerrohr (20) vorgesehen sind, in welchem Lagerrohr der Sensormagnet (82) angeordnet ist und in welchem die Welle (87) und der Sensormagnet (82) drehbar gelagert sind;
mindestens zwei analoge Rotorstellungssensoren (460, 465) zur Erzeugung von analogen Rotorstellungssignalen (B_S1, B_S2), welche Signale die Magnetflussdichte des auf den jeweiligen Sensor (460, 465) vom Sensormagneten (82) her einwirkenden Magnetflusses charakterisieren und welche analogen Rotorstellungssensoren (460, 465) im Bereich des Umfangs des Sensormagneten (82) und außerhalb des Lagerrohres (20) auf einer gemeinsamen, zur Drehachse (85) des Sensormagneten parallelen ebenen Trägeranordnung (468) etwa dort angeordnet sind, wo letztere von einer zur Drehachse (85) senkrechten ersten Ebene (470) geschnitten wird,
wobei diese analogen Rotorstellungssensoren (460, 465) mit einem solchen Abstand voneinander auf der Trägeranordnung (468) angeordnet sind, dass sie im Betrieb zwei sinusförmige Signale (B_S1, B_S2) mit einer Phasenverschiebung von 90° erzeugen;
und einen Signalgenerator (90) zur Erzeugung mindestens eines impulsförmigen Signals (A, B) aus den beiden um 90° phasenverschobenen sinusförmigen Rotorstellungssignalen (B_S1, B_S2).

2. Elektromotor nach Anspruch 1, bei welchem das Lagerrohr (20) mindestens in einem Bereich, welcher sich zwischen den Sensormagneten (82) und der Trägeranordnung (468) befindet, magnetisch transparent ausgebildet ist.

3. Elektromotor nach Anspruch 1, bei welchem drei zur Erzeugung von digitalen Rotorstellungssignalen (Hall1, Hall2, Hall3) ausgebildete Rotorstellungssensoren (52, 54, 56) statorseitig im Bereich des Umfangs des Sensormagneten (82) auf der Trägeranordnung (468) für die analogen Rotorstellungssensoren (460, 465) etwa dort angeordnet sind, wo diese Trägeranordnung (468) von einer zur Drehachse (85) senkrecht verlaufenden zweiten Ebene (472) geschnitten wird, welche einen vorgegebenen Abstand (c) von der ersten Ebene (470) hat.

4. Elektromotors nach Anspruch 3, bei welchem die drei zur Erzeugung von digitalen Rotorstellungssignalen ausgebildeten Rotorstellungssensoren (52, 54, 56) so in einer Reihe (G) angeordnet sind, dass der mittlere Rotorstellungssensor (54) einen kleinsten Abstand (d) vom Sensormagneten (82) aufweist,
und die beiden anderen Rotorstellungssensoren (52, 56) zu beiden Seiten des mittleren Sensors (54) und mit gleichen Abständen (a, b) von diesem angeordnet sind.

5. Elektromotor nach einem der vorhergehenden Ansprüche, welcher einen mit dem Stator (12) in Wechselwirkung stehenden permanentmagnetischen Rotor (14) aufweist, dessen Polzahl mit der Polzahl des Sensormagneten (82) identisch ist.

6. Elektromotor nach einem der vorhergehenden Ansprüche, bei welchem der Signalgenerator (90) dazu ausgebildet ist, ein Positionssignal (Z) zu erzeugen, aus welchem ein Absolutwert für die Rotorstellung ableitbar ist.

7. Elektromotor nach einem der vorhergehenden Ansprüche, bei welchem der Signalgenerator (90) dazu ausgebildet ist, in Abhängigkeit von den sinusförmigen Rotorstellungssignalen (B_S1, B_S2) zwei relativ zueinander um etwa 90° in der Phase versetzte digitale Signalfolgen (A, B) zu erzeugen, von denen jede pro Sinusperiode des zugeordneten Rotorstellungssignals eine vorgegebene Impulszahl hat.

8. Elektromotor nach einem der vorhergehenden Ansprüche, bei welchem die Trägeranordnung (468) an einer Stelle (474) einen Mindestabstand (d) vom Sensormagneten (82) aufweist,
und die analogen Rotorstellungssensoren (460, 465) im Wesentlichen symmetrisch zu dieser Stelle (474) angeordnet sind.

9. Elektromotor nach einem der vorhergehenden Ansprüche, bei welchem der Sensormagnet (82) polorientiert magnetisiert ist.

10. Elektromotor nach einem der vorhergehenden Ansprüche, bei welchem der Sensormagnet (82) lateral magnetisiert ist.

11. Elektromotor nach einem der vorhergehenden Ansprüche, bei welchem die analogen Rotorstellungssensoren (460, 465) so angeordnet sind, dass sie die Erfassung einer tangentialen Komponente (B_t) der vom Sensormagnet (82) erzeugten magnetischen Flussdichte (B) ermöglichen.

12. Elektromotor nach einem der vorhergehenden Ansprüche, bei welchem die analogen Rotorstellungssensoren (460, 465) in einer Sensorebene (469) angeordnet sind, welche nicht senkrecht zur Drehachse (85) verläuft.

13. Elektromotor nach einem der vorhergehenden Ansprüche, bei welchem die analogen Rotorstellungssensoren (460, 465) und der Sensormagnet (82), bezogen auf die axiale Erstreckung der Motorwelle (87), im wesentlichen auf gleicher Höhe angeordnet sind.

14. Elektromotor nach Anspruch 13, bei welchem der Sensormagnet (82) zwischen der Motorwelle (87) und den analogen Rotorstellungssensoren (460, 465) angeordnet ist.

15. Elektromotor nach einem der vorhergehenden Ansprüche, welcher in einem Lüfter angeordnet ist und zu dessen Antrieb dient.

## Claims

1. Electric motor (10) which has:
a stator (12);
a rotor (14) which is rotatable about an axis of rotation (85) and has a sensor magnet (82) with an even number of sensor poles (71, 72, 73, 74), which sensor magnet (82) is constructed for the purpose of generating a magnetic flux with a magnetic flux density which has a sinusoidal progression over the angle of rotation;
and there are provided, for the purpose of rotatably mounting the sensor magnet (82), a shaft (87) and a bearing tube (20), in which bearing tube the sensor magnet (82) is arranged and in which the shaft (87) and the sensor magnet (82) are rotatably mounted;
at least two analogue rotor-position sensors (460, 465) for generating analogue rotor-position signals (B_S1, B_S2), which signals characterise the magnetic flux density of the magnetic flux acting upon the particular sensor (460, 465) from the sensor magnet (82) and which analogue rotor-position sensors (460, 465) are arranged, in the region of the periphery of the sensor magnet (82) and outside the bearing tube (20), on a common, flat carrier arrangement (468) which is parallel to the axis of rotation (85) of the sensor magnet, approximately at the point at which said carrier arrangement is intersected by a first plane (470) which is perpendicular to the axis of rotation (85);
the said analogue rotor-position sensors (460, 465) being arranged on the carrier arrangement (468) at a distance from one another such that, in the course of operation, they generate two sinusoidal signals (B_S1, B_S2) with a phase displacement of 90°;
and a signal generator (90) for generating at least one signal (A, B) in pulse form from the two sinusoidal rotor-position signals (B_S1, B_S2) which are phase-displaced by 90°.

2. Electric motor according to claim 1, in which the bearing tube (20) is of magnetically transparent construction, at least in a region which is located between the sensor magnets (82) and the carrier arrangement (468).

3. Electric motor according to claim 1, in which three rotor-position sensors (52, 54, 56) constructed for the purpose of generating digital rotor-position signals (Hall1, Hall2, Hall3) are arranged, on the stator side in the region of the periphery of the sensor magnet (82), on the carrier arrangement (468) for the analogue rotor-position sensors (460, 465), approximately at the point at which the said carrier arrangement (468) is intersected by a second plane (472) which extends perpendicularly to the axis of rotation (85) and which is at a predetermined distance (c) from the first plane (470).

4. Electric motor according to claim 3, in which the three rotor-position sensors (52, 54, 56) constructed for the purpose of generating digital rotor-position signals are arranged in a row (G) in such a way that the middle rotor-position sensor (54) is at a very small distance (d) from the sensor magnets (82), and the other two rotor-position sensors (52, 56) are arranged on either side of said middle sensor (54) and at equal distances (a, b) from the latter.

5. Electric motor according to one of the preceding claims, which has a permanently magnetic rotor (14) which interacts with the stator (12) and the number of poles of which is identical to the number of poles of the sensor magnet (82).

6. Electric motor according to one of the preceding claims, in which the signal generator (90) is constructed for the purpose of generating a position signal (2) from which it is possible to derive an absolute value for the rotor position.

7. Electric motor according to one of the preceding claims, in which the signal generator (90) is constructed for the purpose of generating, in dependence upon the sinusoidal rotor-position signals (B_S1, B_S2), two digital signal sequences (A, B) which are offset in phase by about 90°, relative to one another, and of which each has a predetermined number of pulses per sine period of the associated rotor-position signal.

8. Electric motor according to one of the preceding claims, in which the carrier arrangement (468) is at a minimum distance (d) from the sensor magnet (82) at a point (474),
and the analogue rotor-position sensors (460, 465) are arranged substantially symmetrically in relation to the said point (474).

9. Electric motor according to one of the preceding claims, in which the sensor magnet (82) is magnetised in a pole-oriented manner.

10. Electric motor according to one of the preceding claims, in which the sensor magnet (82) is magnetised in a lateral manner.

11. Electric motor according to one of the preceding claims, in which the analogue rotor-position sensors (460, 465) are arranged in such a way that they permit the acquisition of a tangential component (B_t) of the magnetic flux density (B) generated by the sensor magnet (82).

12. Electric motor according to one of the preceding claims, in which the analogue rotor-position sensors (460, 465) are arranged in a sensor plane (469) which does not extend perpendicularly to the axis of rotation (85).

13. Electric motor according to one of the preceding claims, in which the analogue rotor-position sensors (460, 465) and the sensor magnet (82) are arranged substantially at the same height, referred to the axial extension of the motor shaft (87).

14. Electric motor according to claim 13, in which the sensor magnet (82) is arranged between the motor shaft (87) and the analogue rotor-position sensors (460, 465).

15. Electric motor according to one of the preceding claims, which is arranged in a fan and serves to drive the latter.

## Revendications

1. Moteur électrique (10), lequel présente :
un stator (12) ;
un rotor (14) pouvant tourner autour d'un axe de rotation (85) et qui présente un aimant de capteur (82) ayant un nombre pair de pôles de capteur (71, 72, 73, 74), lequel aimant de capteur (82) est conçu pour générer un flux magnétique ayant une densité de flux magnétique qui a une allure sinusoïdale en fonction de l'angle de rotation ;
un arbre (87) et un tube-palier (20) qui sont prévus pour le montage tournant de l'aimant de capteur (82), dans lequel tube-palier l'aimant de capteur (82) est disposé et dans lequel l'arbre (87) et l'aimant de capteur (82) sont montés tournants ;
au moins deux capteurs de position de rotor analogiques (460, 465) pour générer des signaux de position de rotor analogiques (B_S1, B_S2), lesquels signaux caractérisent la densité de flux magnétique du flux magnétique qui agit sur le capteur respectif (460, 465) de l'aimant de capteur (82) et lesquels capteurs de position de rotor analogiques (460, 465) sont disposés dans la périphérie de l'aimant de capteur (82) et à l'extérieur du tube-palier (20) sur un dispositif de support (468) plan, parallèle à l'axe de rotation (85) de l'aimant de capteur, approximativement là où ce dispositif de support (468) est coupé par un premier plan (470) perpendiculaire à l'axe de rotation (85),
ces capteurs de position de rotor analogiques (460, 465) étant disposés sur le dispositif de support (468) à une distance mutuelle telle qu'ils génèrent en fonctionnement deux signaux sinusoïdaux (B_S1, B_S2) présentant un déphasage de 90° ;
et un générateur de signaux (90) pour générer au moins un signal impulsionnel (A, B) à partir des deux signaux de position de rotor sinusoïdaux (B_S1, B_S2) déphasés de 90°.

2. Moteur électrique selon la revendication 1, dans lequel le tube-palier (20) est conçu transparent magnétiquement au moins dans une zone qui se trouve entre l'aimant de capteur (82) et le dispositif de support (468).

3. Moteur électrique selon la revendication 1, dans lequel trois capteurs de position de rotor (52, 54, 56) conçus pour générer des signaux de position de rotor numériques (Hall1, Hall2, Hall3) sont disposés côté stator dans la périphérie de l'aimant de capteur (82) sur le dispositif de support (468) pour les capteurs de position de rotor analogiques (460, 465), approximativement là où ce dispositif de support (468) est coupé par un deuxième plan (472) perpendiculaire à l'axe de rotation (85) qui est situé à une distance prédéfinie (c) du premier plan (470).

4. Moteur électrique selon la revendication 3, dans lequel les trois capteurs de position de rotor (52, 54, 56) conçus pour générer des signaux de position de rotor numériques sont disposés sur une rangée (G) de façon que le capteur de position de rotor central (54) présente une distance minimale (d) par rapport à l'aimant de capteur (82),
et que les deux autres capteurs de position de rotor (52, 56) soient disposés de chaque côté du capteur central (54) et à égales distances (a, b) de celui-ci.

5. Moteur électrique selon une des revendications précédentes, lequel présente un rotor (14) à aimant permanent en interaction avec le stator (12), dont le nombre de pôles est identique au nombre de pôles de l'aimant de capteur (82).

6. Moteur électrique selon une des revendications précédentes, dans lequel le générateur de signaux (90) est conçu pour générer un signal de position (Z) dont une valeur absolue de la position du rotor peut être dérivée.

7. Moteur électrique selon une des revendications précédentes, dans lequel le générateur de signaux (90) est conçu pour générer en fonction des signaux de position de rotor sinusoïdaux (B_S1, B_S2) deux suites de signaux numériques (A, B) déphasées de 90° dont chacune présente un nombre d'impulsions prédéfini par période sinusoïdale du signal de position de rotor associé.

8. Moteur électrique selon une des revendications précédentes, dans lequel le dispositif de support (468) présente à un point (474) une distance minimale (d) par rapport à l'aimant de capteur (82),
et les capteurs de position de rotor analogiques (460, 465) sont disposés essentiellement symétriquement par rapport à ce point (474).

9. Moteur électrique selon une des revendications précédentes, dans lequel l'aimant de capteur (82) est magnétisé avec une orientation polaire.

10. Moteur électrique selon une des revendications précédentes, dans lequel l'aimant de capteur (82) est magnétisé latéralement.

11. Moteur électrique selon une des revendications précédentes, dans lequel les capteurs de position de rotor analogiques (460, 465) sont disposés de façon à permettre la détection d'une composante tangentielle (B_t) de la densité de flux magnétique (B) générée par l'aimant de capteur (82).

12. Moteur électrique selon une des revendications précédentes, dans lequel les capteurs de position de rotor analogiques (460, 465) sont disposés dans un plan de capteurs (469) qui n'est pas perpendiculaire à l'axe de rotation (85).

13. Moteur électrique selon une des revendications précédentes, dans lequel les capteurs de position de rotor analogiques (460, 465) et l'aimant de capteur (82) sont disposés essentiellement à égale hauteur par rapport à l'extension axiale de l'arbre de moteur (87).

14. Moteur électrique selon la revendication 13, dans lequel l'aimant de capteur (82) est disposé entre l'arbre de moteur (87) et les capteurs de position de rotor analogiques (460, 465).

15. Moteur électrique selon une des revendications précédentes, lequel est disposé dans un ventilateur et sert à son entraînement.
